# EUROPEAN PATENT SPECIFICATION

(11) **EP 3 080 315 B1**
(45) Date of publication and mention of the grant of the patent: **03.07.2019**
(21) Application number: 13802980.6
(22) Date of filing: 11.12.2013
(51) Int. Cl.: C22B 1/06

(54) **METHOD FOR TREATING SULFIDE-FREE MINERALS**
VERFAHREN ZUR BEHANDLUNG VON SULFIDFREIEN MINERALIEN
PROCÉDÉ DE TRAITEMENT DE MINÉRAUX SANS SULFURE

(43) Date of publication of application: 19.10.2016
(73) Proprietor: Outotec (Finland) Oy, 02230 Espoo (FI)
(72) Inventor: SCHNEIDER, Günter, 64653 Lorsch (DE); ANASTASIJEVIC, Nikola, 63674 Altenstadt (DE); GÜNTNER, Jochen, 63796 Kahl (DE)
(74) Representative: Keil & Schaafhausen Patent- und Rechtsanwälte PartGmbB
(86) International application number: PCT/EP2013/076214
(87) International publication number: WO 2015/086060

(56) References cited:
- FR-A1- 2 463 189
- US-A- 2 036 015
- US-A- 3 148 022
- US-A- 3 650 679
- US-A- 4 069 041

## Description

### FIELD OF THE INVENTION

The present invention relates to treatment of metal containing ores and concentrates and provides a method of producing metal oxides by sulfati- zation of a sulfide-free ore and/or concentrate comprising sulfide-free minerals, such as sulfide-free ores and/or concentrates containing metal oxides.

### BACKGROUND OF THE INVENTION

Conventionally sulfur-free minerals are first calcinated and then leached in sulfuric acid solution to separate valuable metals from the ore.

Salih Ugur Bayca describes in Recovery of Boric Acid from Cole- manite Waste by Sulfuric Acid Leaching and Crystallization (2nd International Symposium on Sustainable Development, June 8-9 2010, Sarajevo) production of sulfates by leaching in sulfuric acid solution. However, this well-known technology has a lot of disadvantages. For example, the handling of sulfuric acid is coupled with high production costs and potential risks related to longdistance transportation of the sulfuric acid and significant waste water problems related to the handling of sulfuric acid.

US Patent 1 ,636,456 discloses a method for treating borate ore for the recovery of boron compounds by means of a hot ammonium chloride solu-tion. However, this method aims at in-situ recovery of calcium boron compounds and does not allow a separation between boron compounds and contained impurities.

Publication WO 2012/093170 discloses a method for the recovery of niobium and tantalum utilizing roasting with an acidic roasting agent providing roasting in a sulfate medium. The ore mentioned is suitably an oxide mineral. However, the said publication does not offer a solution for the fact that the acidic roasting agent is only partially used for the sulfating reaction thus resulting in a high consumption of the acidic roasting agent.

Document GB 000 794 teaches a process for the production of borax from native compounds on boron in which the boron is combined with a metal capable of forming an insoluble sulfate. Thus, this process does not touch a sulfatizing sulfide-free borate mineral in a dry process to produce boron oxides.

### BRIEF DESCRIPTION OF THE INVENTION

An object of the present invention is to provide a method for selective recovery of desired metals from sulfide-free ore and/or concentrate. The objects of the invention are achieved by a method which is characterized by what is stated in the independent claim. The preferred embodiments of the invention are disclosed in the dependent claims.

The invention is based on the idea of sulfatizing sulfide-free minerals in a dry process by contacting the sulfide-free mineral with sulfur trioxide and thereby forming metal sulfate(s) and metal oxide(s) from the multi metal oxide(s) comprised in the sulfide-free ore.

By sulfatizing sulfide-free mineral in a dry process sulfuric acid is not produced as interim product. This reduces the production costs and potential risks related to long-distance transportation of sulfuric acid are avoided. A further advantage of the present invention is that sulfates produced by the method can be dissolved in water if needed for further purification of the desired metals or removal of undesired metals.

### BRIEF DESCRIPTION OF THE DRAWINGS

In the following the invention will be described in greater detail by means of preferred embodiments with reference to the attached drawings, in which
Figure 1 is a simplified flow diagram of the method of the present invention;
Figure 2 shows an arrangement of a low temperature process illustrating a first example of the method of the present invention;
Figure 3 shows an alternative arrangement of a low temperature process illustrating a second example of the method of the present invention;
Figure 4 shows an arrangement of a medium temperature process illustrating a third example of the method of the present invention;
Figure 5 shows an arrangement of a high temperature process illustrating a fourth example of the method of the present invention.

### DETAILED DESCRIPTION OF THE INVENTION

The present invention relates to a method of producing metal oxide(s) by sulfatizing a sulfide-free ore and/or concentrate comprising sulfide-free mineral(s), typically a sulfide-free ore and/or concentrate containing metal oxide(s). The method comprises the steps of:
(o) providing a sulfide-free ore and/or concentrate comprising sulfide-free mineral(s);
(a) contacting the sulfide-free ore and/or concentrate with gaseous sulfur trioxide (SO₃) for sulfatizing the sulfide-free mineral(s) thereby forming metal sulfate(s) and metal oxide(s).

The term "sulfide-free ore and/or concentrate" refers to a class of ores and/or concentrates produced thereof, whereby the ore contains mineral(s) that do not contain sulfide (S2⁻) as the major anion i.e. sulfide-free mineral(s). Advantageously the term "sulfide-free ore and/or concentrate" is understood to encompass sulfide-free ores, sulfide-free concentrates, sulfide-free oxides, sulfide-free hydroxides, sulfide-free silicates and any mixtures thereof. The method of the present invention is thus applicable for sulfatization ores/and or concentrates comprising solid sulfide-free minerals containing one or more value elements selected from the group consisting of Cu, Co, Ni, Fe, Mn, Zn, U, Al, Ti, In, Cr, V, Ag, Cd, Zr, Hg, La, Bi, and Sb, in particular borate minerals such as colemanite, ulexite, kernite or borax. Ores and/or concentrates comprising iron oxide and utilized for example in rare earth production and uranium production are also preferred.

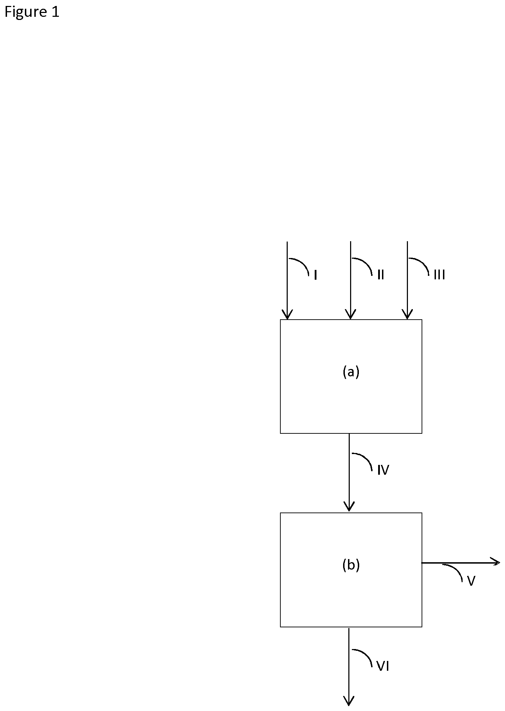

Figure 1 shows a simplified flow diagram of the method of the present invention. With reference to Figure 1, sulfide-free ore and/or concentrate (I), sulfatization agent (II) and optionally oxygen (III) are fed into a sulfatization step (a) wherein the sulfide-free ore and/or concentrate is contacted with SO₃ and the sulfide-free minerals are converted into metal sulfate(s) and metal oxide(s). SO₃ required for the sulfatization of the sulfide-free minerals can be generated either in separate units ahead of the sulfatization reactor or in situ. Thus the sulfatization agent (II) either comprises or consists of SO₃, or SO₃ is generated in situ in the reactor from the sulfatization agent. In the latter case the sulfatization agent (II) may comprise or consist of SO₂ and/or sulfur. In the sulfatization step (a) SO₃ reacts with the multi metal oxide(s) contained in the sulfide-free mineral(s) (I) thereby forming metal sulfate(s) and metal oxide(s) and resultantly a crude product mixture (IV) comprising unreacted SO₃, metal sulfate(s), metal oxide(s), and any unreacted sulfate-free mineral(s) is obtained. An example of such reaction is the sulfatization of calcium diborate (CaB₂O₄):

CaB₂O₄ + SO₃ → CaSO₄ + B₂O₃ (i)

S03 is advantageously added in hyperstoichiometric amount to the sulfatization step (a). A stoichiometric factor of 1.3 to 1.5 is typically sufficient.

The sulfatization step (a) is typically performed in a fluidized bed reactor (FB), a circulating fluidized bed reactor (CFB), or in an annular fluidized bed reactor (AFB). The type of the reactor depends on the fluidization behavior of the solid feed i.e. sulfide-free mineral(s), the sulfatization reaction kinetics, and the plant production capacity. The FB reactor is suitable for feed materials characterized by moderate and critical fluidization behavior and/or slow reaction kinetics (long retention times of solids in the reactor) as well as for lower production capacities (up to 1000 tpd). The CFB reactor is preferred for processing of materials with good fluidization behavior, showing fast or moderate reaction kinetics and in case when large plant production capacities are needed. The CFB reactor comprises a separating unit, typically a cyclone, for recycling the solids entrained with the fluidizing gas back to the reactor. The AFB reactor is like CFB but with special type of windbox including a central nozzle and is utilized for processes where the temperature of gas stream entering the fluidized bed reactor is higher than 400 °C or in other circumstances eliminating tuyeres.

The temperature of the sulfatization step (a) depends on the nature of sulfide-free mineral(s) comprised in the sulfide-free ore and/or concentrate and the sulfatization agent is selected accordingly as a result of the reaction kinetics. The method of the invention can thus be separated into three cases:
For sulfatization with sulfur trioxide (SO₃) as the sulfatization agent (low temperature process) the temperature is advantageously 700 °C or less, preferably from 200 to 700 °C, more preferably from 300 to 630 °C. Sulfatization at low temperature is particularly suitable for sulfide-free minerals, such as borates, rare earth oxides, Th-oxides, and U-oxides.

For sulfatization with sulfur dioxide (SO₂) as the sulfatization agent (medium temperature process) the temperature is advantageously from 400 to 800 °C, preferably from 500 to 700 °C. Sulfatization at a medium temperature is particularly suitable for sulfide-free minerals such as oxides of Cu, Co, Fe, or Zn and any mixtures thereof.

For sulfatization with sulfur as the sulfatization agent (high temperature process) the temperature is advantageously from 700 to 1200 °C, preferably from 800 to 1000 °C. Sulfatization at a high temperature is particularly suitable for sulfide-free minerals comprising Ni.

The sulfatization reaction may be performed under atmospheric or slightly pressurized conditions. Preferably the sulfatization reaction is performed under pressure from 1 to 3 bar, more preferably from 1.2 to 1.8 bar. Optimal selection of the reaction pressure will improve the reaction kinetics and thus the yield of the desired products.

In an example of the present invention, the method further comprises (b) separating unreacted gaseous sulfur trioxide SO₃ from the formed metal sulfate(s) and metal oxide(s). In a further example of the present invention at least part of the separated unreacted SO₃ is recycled back to the SO₃ generation step and/or the sulfatization step.

With further reference to Figure 1 the crude product mixture (IV) obtained from the sulfatization step (a) is be subjected to a separation step (b), wherein gas and solid fractions of the crude product mixture are separated i.e. unreacted gaseous SO₃ (V) is separated from the formed metal sulfate(s), metal oxide(s), and any remaining unreacted sulfur-free minerals (VI).

According to a further example of the present invention SO₃ required in step (a) is produced by combining sulfur with oxygen to form SO₂ and further catalytically converting the sulfur dioxide into SO₃. In such case SO₃ is typically produced in separate units ahead of the sulfatization reactor. The temperature in the catalytic conversion of sulfur dioxide into sulfur trioxide is advantageously maintained in a range of 400 to 630 °C for ensuring maximum conversion of SO₂ to SO₃. According to a further example of the present invention the temperature in the catalytic conversion can be controlled by gas/gas heat exchangers situated between catalytic conversion units.

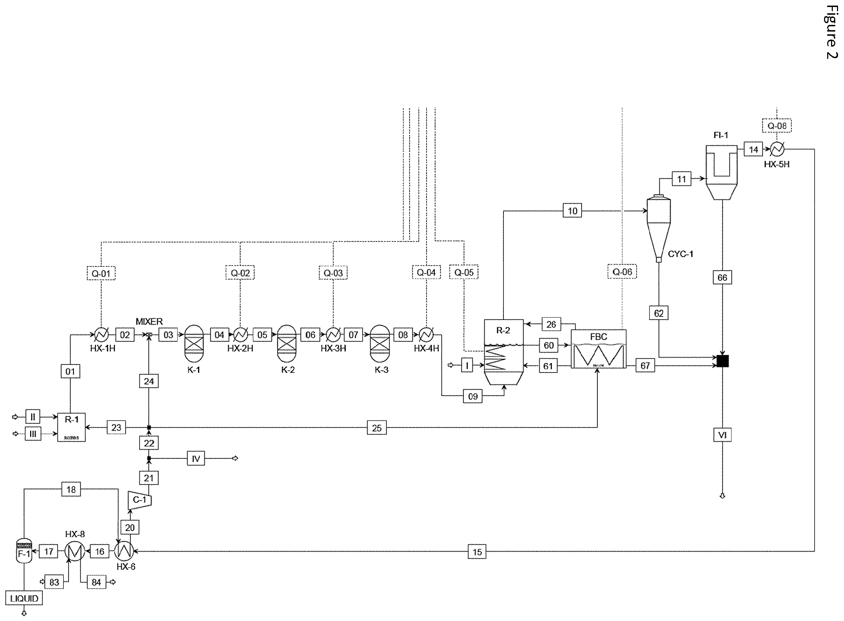

Figure 2 shows an example of a process flow of a low temperature sulfatization process. Sulfide-free minerals (I), e.g. calcium borates, are fed into a sulfatization reactor (R-2) wherein the sulfide-free minerals (I) are contacted with gaseous SO₃ (09) at an elevated temperature and under atmospheric or slightly pressurized conditions. SO₃ (09) introduced to the sulfatization reactor (R-2) is obtained by combustion of sulfur (II) with oxygen (III) in a combustion reactor (R-1) to obtain a SO₂ containing gas stream (01). The temperature of the combustion step is typically from 1000 to 1600 °C, preferably from 1100 to 1250 °C. The obtained SO₂ containing gas stream (01) is then sent to a catalytic reactor (K-1) to oxidize SO₂ to SO₃ with the remaining oxygen. Oxidation is typically performed at temperature from 420 to 630 °C.

If required, the thus obtained SO₃ containing gas stream (04) may then be subjected to further oxidation steps in one or more further catalytic reactors (K-2, K-3) to oxidize any remaining SO₂ to SO₃ with the remaining oxygen. The thus obtained SO₃ containing gas stream (09) is then introduced to the sulfatization reactor (R-2) and reacted with the sulfur-free minerals (I) to obtain metal sulfate(s) and metal oxide(s), e.g. calcium sulfate and boron oxide. To maintain the temperature of the sulfatization step in desired ranges the interim gases leaving the catalyst layers of the catalytic reactors (K-1, K-2, K-3) can be cooled down in one ore more gas/gas heat exchangers (HX-1H, HX-2H, HX-3H). Additionally or alternatively the temperature of the inlet SO₃ gas stream (09) can be adjusted before entering the reactor by cooling in a gas/gas heat reactor (HX-4H). Heat streams (Q-01 - Q-04) obtained from the heat exchangers can be led to a heat recovery unit for energy recovery. To further control the temperatures of the combustion step and/or the first catalytic conversion step a SO₂/SO₃ gas stream (23/24) can be fed to the reactor (R-1) and/or the catalytic reactor (K-1), respectively.

After the sulfatization step (a) the crude product mixture (VI) containing unreacted SO₃ and solids, i.e. metal sulfate(s), metal oxide(s), and any unreacted sulfur-free mineral(s) can subjected to a gas-solid separation for separating unreacted gaseous SO₃ from the solids. Typically a first stage gas-solid separation is performed using a cyclone. Part of the separated solids can be recirculated and fed back to the sulfatization step (a). By using a cyclone the reaction time between the sulfide-free mineral(s) and SO₃ may be extended and thereby a higher yield achieved. With further reference to Figure 2, the crude product mixture (10) obtained from the reactor (R-2) is thus introduced into a cyclone (CYC-1) to obtain a solid stream (62) and an off-gas stream (11). Finally in a filter (FI-1) the exiting off-gas (11) from the cyclone (CYC-1) is filtered from the solid particles not captured by the cyclone. Thus obtained purified off-gas (13) may be recycled to SO₃ production and the solids (66) can be combined with the solid stream (62).

With further reference to Figure 2, a fluidized bed heat exchanger (FBC) may be connected to the reactor (R-2) to remove heat from the reactor. Type of the heat exchangers utilized in the method of the invention depends on the heat integration of the steam system with operating and economical aspects. Examples of suitable heat exchangers include waste heat boilers, economizers, evaporators, and reboilers.

The separated unreacted sulfur trioxide, i.e. the off-gas, may be used for heat production or as a source for production of weak acid possibly needed in downstream process steps such as calcine leaching. Alternatively or additionally the off-gas can be recirculated into the sulfatization step (a) and/or into SO₂ and/or SO₃ generation steps. With reference to Figure 2, the off-gas stream (14) is first cooled down in one or more heat exchangers (HX-5H, HX-6, HX-8), after which it is optionally fed into a liquid demister (F-1) before it is recycled into the above mentioned process steps through a recycle gas compressor (C-1). The liquid demister (F-1) can be used to remove moisture from the gas stream.

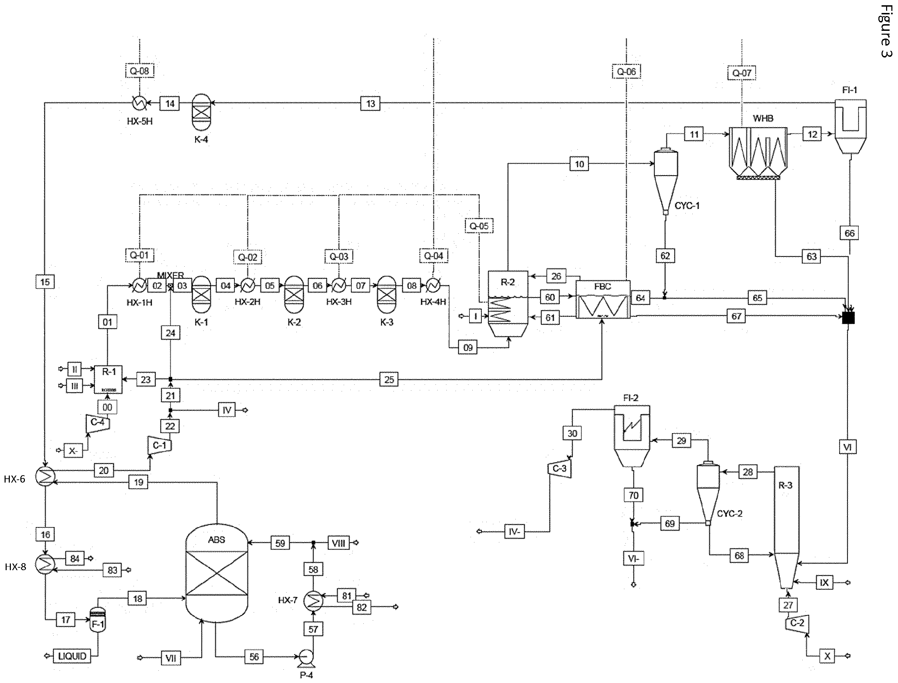

In accordance with a suitable example of the present invention air is utilized to control the oxygen concentration in the SO₂ generation step. This ensures optimum temperature control of the oxidation. Figure 3 shows a further example of a process flow of a low temperature sulfatization process. In Figure 3, like components are designated by the same reference numerals as used in Figure 2. With reference to Figure 3, air stream (X') is fed into the combustion reactor (R-1), where SO₂ is produced to obtain a SO₂ containing gas stream (01). The obtained SO₂ containing gas stream (01) is then sent to a catalytic reactor (K-1) to oxidize SO₂ to SO₃ with the remaining oxygen. The thus obtained SO₃ containing gas stream (04) is then be subjected to further oxidation steps in further catalytic reactors (K-2, K-3) to oxidize any remaining SO₂ to SO₃ with the remaining oxygen. The thus obtained SO₃ containing gas stream (09) is then introduced to the sulfatization reactor (R-2) and reacted with the sulfur-free minerals (I) to obtain metal sulfate(s) and metal oxide(s).

According to a further example of the present invention the method may also comprise cooling of the off-gas stream between the sulfatization step (a) and the gas-solid separation step (b). The cooling is typically performed by a waste heat boiler or a recuperator and by this is assured that the sensible heat of the off-gas can be used either for steam production or elsewhere in the process.

With reference to Figure 3, off-gas (11) obtained from the cyclone (CYC-1) is cooled in a waste heat boiler (WHB) where its temperature is reduced to 200 to 500°C, preferably to approx. 300 °C before entering into the filter (FI-1) for final separation of the gas and solid fractions.

The separated unreacted sulfur trioxide, i.e. the off-gas, may be used for heat production or as a source for production of weak acid possibly needed in downstream process steps such as calcine leaching. Alternatively or additionally the off-gas can be recirculated into the sulfatization step (a) and/or into SO₂ and/or SO₃ generation steps. Optionally the recirculated off-gas is fed to a catalytic reactor to oxidize SO₂ comprised in the off-gas stream to SO₃ with the remaining oxygen. Oxidation is typically performed at temperature from 400 to 630 °C.

With reference to Figure 3 the SO₂ and SO₃ containing off-gas stream (19) obtained from the filter (FI-1) is sent to a catalytic reactor (K-4) to oxidize SO₂ to SO₃. The thus obtained SO₃ enriched off-gas stream (14) can then be cooled down in one or more heat exchangers (HX-5H, HX-6, HX-8), before it is recycled into the above mentioned process steps though a recycle gas compressor (C-1). Cooling of the off-gas stream before it is entered into the gas compressor reduces required compression energy.

Optionally the recycled SO₃ containing off-gas stream is treated to absorb SO₃ from the off-gas and convert it to sulfuric acid (H₂SO₄). With reference to Figure 3, S03 containing off-gas stream (18) is fed in to a SO₃ absorber (ABS) wherein is contacted with water (VII) to provide aqueous sulfuric acid (VIII). Part of the obtained sulfuric acid stream (59) can be recycled back into the absorption step to ensure maximum conversion of SO₃ to sulfuric acid.

In accordance with a further example of the present invention solid fractions obtained from the gas/solid separation stages can be send to a selective desulfatization of undesired metal sulfate(s) to metal oxide(s). After the desulfatization step solids and gases can be separated in similar fashion as after the sulfatization step (a).

With further reference to Figure 3, the crude product mixture (VI) containing solids, i.e. metal sulfate(s), metal oxide(s), and any unreacted sulfur-free mineral(s) can be fed to a reactor (R-3) where it is subjected to further reactions as for example controlled decomposition reactions. The temperature of the desulfatization step is typically from 600 to 1200 °C. Desulfatization is typically performed in a fluidized bed reactor (FB) or a circulating fluidized bed reactor (CFB). The obtained desulfatized crude product mixture (28) is then introduced into a cyclone (CYC-2) to obtain a solid stream (68/69) and an off-gas stream (29). Part of the separated solids (68) can be recirculated and fed back to the desulfatization step. Finally in a filter (FI-2) the exiting off-gas (29) from the cyclone (CYC-2) is filtered from the solid particles not captured by the cyclone. Thus obtained purified off-gas (30) may be recycled to SO₃ production and the desulfatized solids (20) can be recovered.

Desulfatization is useful in cases where the sulfatization step (a) is not selective enough and undesired metal sulfates can be oxidized back to corresponding metal oxides.

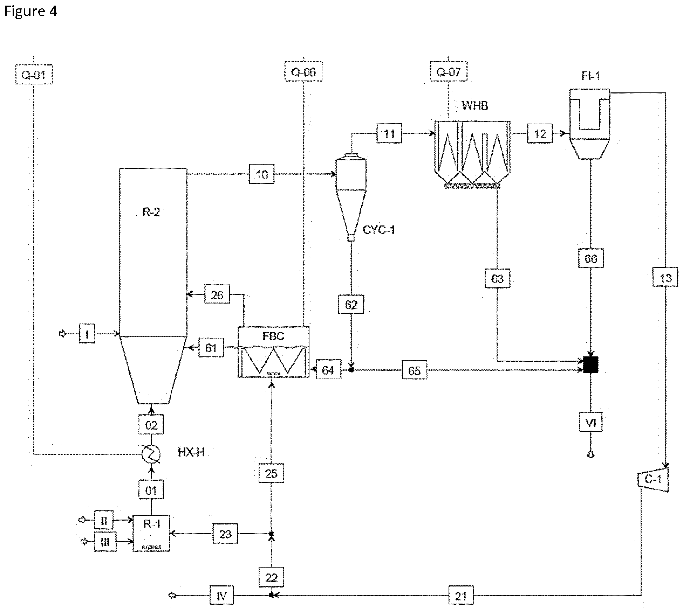

Figure 4 shows an example of a process flow of a medium temperature sulfatization process. In Figure 4, like components are designated by the same reference numerals as used in Figure 2 and/or Figure 3.

Sulfide-free mineral(s) (I) is fed into a sulfatization reactor (R-2) wherein the sulfide-free mineral(s) (I) is contacted with SO₃ produced in situ from SO₂ at an elevated temperature as discussed above and under atmospheric or slightly pressurized conditions. SO₂ (02) introduced to the sulfatization reactor (R-2) may be obtained by combustion of sulfur (II) with oxygen (III) to obtain a gas steam containing SO₂ (01) in a combustion reactor (R-1). The temperature of the combustion stage is typically from 1000 to 1600 °C, preferably from 1100 to 1350 °C. The obtained gas stream containing SO₂ gas stream (01) is then preferably cooled in a gas/gas heat exchanger (HX-H) to 200 to 500 °C to obtain a cooled gas stream (02), and then directly fed into the sulfatization reactor (R-2) together with the remaining oxygen to generate SO₃ in situ in the reactor. The optional heat exchanger is utilized to maintain the temperature of the sulfatization step in desired ranges.

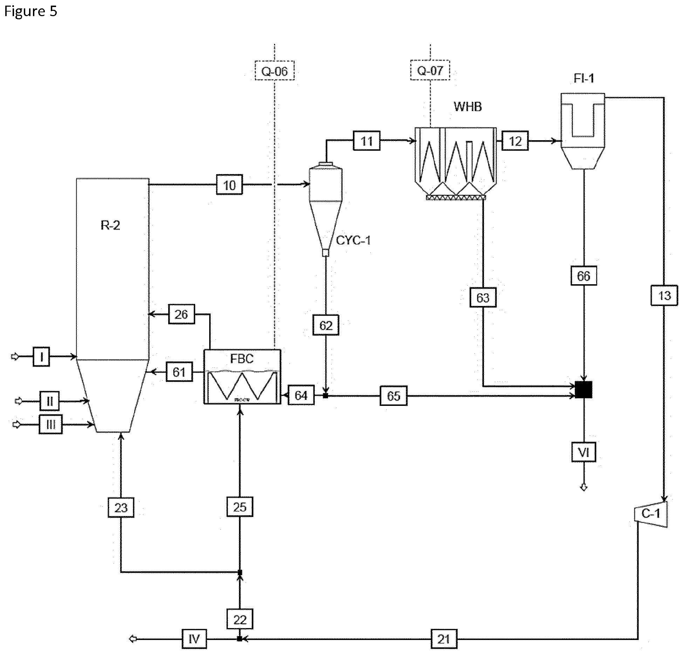

Figure 5 shows an example of a process flow of a high temperature sulfatization process. In Figure 5, like components are designated by the same reference numerals as used in Figure 2, Figure 3, and/or Figure 4. Sulfide-free mineral(s) (I), sulfur (II), and oxygen (III) are fed into a sulfatization reactor (R-2) wherein the sulfide-free mineral(s) (I) is contacted with SO₃ produced in situ from sulfur and O₂ at an elevated temperature as discussed above and under atmospheric or slightly pressurized conditions.

Sulfur utilized in the generation of SO₂ and/or SO₃ is preferably liquid sulfur, which is typically provided at a temperature from 120 to 150 °C, or solid sulfur, which is typically provided at room temperature. Oxygen utilized in the generation of SO₂ is generally ambient air in order to control the reaction temperature. Oxygen utilized in the generation of SO₃ can be technical pure oxygen, containing typically 98.5 - 99.8 vol% oxygen or ambient air.

Depending on the nature of the obtained metal sulfate(s) and metal oxide(s), one of them can be selectively leached from the crude reaction mixture into leach liquor. For example unwanted, in solid state remaining compounds/elements can be separated from the wanted, dissolved valuable compounds/elements. This is suitable for example for sulfur-free minerals which provide calcium sulfate as a result of the sulfatization step. An example of such a reaction is the following:

CaSO₄ + B₂O₃ + 4H₂O → 2 H₃BO₃ (aq) + CaSO₄·H₂O (s) (ii)

Thus according to a preferred example of the invention the method may further comprise
(c) leaching the formed metal sulfate(s) and metal oxide(s) in an aqueous leach liquor thereby extracting the metal oxide(s) into the aqueous leach liquor; and
(d) performing a solid-liquid separation for separating the metal sulfate(s) remaining in solid state from the dissolved metal oxide(s).

The aqueous leach liquor is typically raffinate, spent acid, or water, preferably water. Thus the metal oxide(s) formed in the sulfatization step (a) are leached into the leach liquor.

As an example of the above, boron oxide can be produced by the method of the present invention. Colemanite (CaB₃O₄(OH)₃·H₂O) is subjected to a decomposition and selective sulfatization reaction in the presence of SO₃. Unwanted Ca is sulfated to gypsum (CaSO₄) and the wanted B is oxidized and finally dissolved to obtain boron oxide.

According to an alternative preferred example of the invention the method may further comprise
(c) leaching the formed metal sulfate(s) and metal oxide(s) in an aqueous leach liquor thereby extracting the metal sulfate(s) into the aqueous leach liquor; and
(d) performing a solid-liquid separation for separating the metal oxide(s) remaining in solid state from the dissolved metal sulfate(s).

In this case the aqueous leach liquor is typically water or dilute sulfuric acid. Thus the metal sulfate(s) formed in the sulfatization step (a) are leached into the aqueous leach liquor.

As an example of the above, valuable metals can be recovered from iron containing ore by the method of the present invention. Iron oxide present for example in rare earth and uranium minerals is converted to soluble iron sulfate and the valuable metals remain in solid form. Iron sulfate is then removed by solid-liquid separation and the solids comprising the valuable metals are subjected to further processing steps to recover the valuable metals. If the valuable metals form also soluble sulfates, iron sulfate is decomposed at elevated temperature into insoluble oxide.

It will be obvious to a person skilled in the art that, as the technology advances, the inventive concept can be implemented in various ways. The invention and its embodiments are not limited to the examples described above but may vary within the scope of the claims.

## Claims

1. A method of producing boron oxide by sulfatizing a sulfide-free ore and/or concentrate comprising
(o) providing a sulfide-free ore and/or concentrate comprising sulfide-free borate mineral(s);
(a) contacting the sulfide-free ore and/or concentrate with gaseous SO₃ for sulfatizing the sulfide-free borate mineral(s) thereby forming metal sulfate(s) and boron oxide.

2. The method as claimed in claim 1, wherein the sulfide-free ore and/or concentrate is selected from the group consisting of sulfide-free ores, sulfide-free concentrates, sulfide-free oxides, sulfide-free hydroxides, sulfide-free silicates, and any mixtures thereof, comprising borate minerals.

3. The method as claimed in claim 1 or 2, wherein sulfide-free ore- and/or concentrate is selected from the group consisting of ores and/or concentrates comprising solid sulfide-free minerals containing one or more borate minerals such as colemanite, ulexite, kernite or borax.

4. The method as claimed in any one of claims 1 to 3, wherein the sulfide-free borate mineral is contacted with SO₃ in a fluidized bed reactor (FB), circulating fluidized bed reactor (CFB) or annular fluidized bed reactor (AFB).

5. The method as claimed in any one of claims 1 to 4, wherein the SO₃ used in step (a) is produced in situ from sulfur.

6. The method as claimed in any one of claims 1 to 4, wherein the SO₃ used in step (a) is produced in situ from sulfur dioxide (SO₂).

7. The method as claimed in any one claims 1 to 4, wherein the SO₃ used in step (a) is produced by combining sulfur with oxygen to form sulfur dioxide and further catalytically converting the sulfur dioxide into sulfur trioxide wherein preferably the sulfur trioxide (SO₃) is produced in separate units ahead of the sulfatization reactor..

8. The method as claimed in claim 5, wherein the temperature of step (a) is from 700 to 1200 °C, preferably from 800 to 1000 °C.

9. The method as claimed in claim 6, wherein the temperature of step (a) is from 400 to 800 °C, preferably from 500 to 700 °C.

10. The method as claimed in claim 7, wherein the temperature of step (a) is from 200 to 700 °C, more preferably from 300 to 630 °C.

11. The method as claimed in any one of claims 1 to 10, wherein step (a) is performed under pressure from atmospheric pressure 1 to 3 bar, preferably from 1.2 to 1.8 bar.

12. The method as claimed in claim any one of claims 1 to 11, wherein the method further comprises
(b) separating unreacted gaseous SO₃ from the formed metal sulfate(s) and boron oxide.

13. A method as claimed in any one of claims 1 to 12, wherein the method further comprises
(c) leaching the formed metal sulfate(s) and boron oxide in an aqueous leach liquor thereby extracting the boron oxide into the aqueous leach liquor; and
(d) performing a solid-liquid separation for separating the metal sulfate(s) remaining in solid state from the dissolved boron oxide.

14. A method as claimed in any one of claims 1 to 12, wherein the method further comprises
(c) leaching the formed metal sulfate(s) and boron oxide in an aqueous leach liquor thereby extracting the metal sulfate(s) into the aqueous leach liquor; and
(d) performing a solid-liquid separation for separating the boron oxide remaining in solid state from the dissolved metal sulfate(s).

15. The method claimed in claim 13 or 14, wherein the aqueous leach liquor is raffinate, spent acid, or water, preferably water.

## Patentansprüche

1. Ein Verfahren zur Herstellung von Boroxid durch Sulfatisieren eines sulfidfreien Erzes und/oder Konzentrates umfassend:
o) Bereitstellen eines sulfidfreien Erzes und/oder Konzentrates, das sulfidfreie Boratmineral(ien) enthält;
a) in Kontakt bringen des sulfidfreien Erzes und/oder Konzentrates mit gasförmigem SO₃ zur Sulfatisierung des/der Sulfidfreien Boratminerals(ien), wodurch Metallsulfat(e) und Boroxid gebildet werden.

2. Das Verfahren nach Anspruch 1, wobei das sulfidfreie Erz und/oder Konzentrat aus der Gruppe ausgewählt wird, die aus sulfidfreien Erzen, sulfidfreien Konzentraten, sulfidfreien Oxiden, sulfidfreien Hydroxiden, sulfidfreien Silikaten und Mischungen hiervon bestehen, die Boratmineralien enthalten.

3. Das Verfahren nach Anspruch 1 oder 2, wobei das sulfidfreie Erz und/oder Konzentrat ausgewählt wird aus der Gruppe, die aus Erzen und/oder Konzentraten besteht, die sulfidfreie Mineralien aufweisen, die eines oder mehrere Boratmineralien, wie Colemanit, Ulexit, Kernit oder Borax, enthalten.

4. Das Verfahren nach einem der Ansprüche 1 bis 3, wobei das sulfidfreie Boratmineral in einem Wirbelschichtreaktor (FB), einem Reaktor mit zirkulierender Wirbelschicht (CFB) oder einem Reaktor mit Ringwirbelschicht (AFB) in Kontakt mit SO₃ gebracht wird.

5. Das Verfahren nach einem der Ansprüche 1 bis 4, wobei das in Schritt (a) verwendete SO₃ in situ aus Schwefel hergestellt wird.

6. Das Verfahren nach einem er Ansprüche 1 bis 4, wobei das in Schritt (a) verwendete SO₃ in situ aus Schwefeldioxid (SO₂) hergestellt wird.

7. Das Verfahren nach einem der Ansprüche 1 bis 4, wobei das in Schritt (a) verwendete SO₃ hergestellt wird durch Kombination von Schwefel mit Sauerstoff zur Bildung von Schwefeldioxid und weiterhin katalytisches Umwandeln des Schwefeldioxids in Schwefeltrioxid, wobei das Schwefeltrioxid (SO₃) vorzugsweise in separaten Einheiten vor dem Sulfatisierungsreaktor hergestellt wird.

8. Das Verfahren nach Anspruch 5, wobei die Temperatur in Schritt (a) 700 bis 1200 °C, vorzugsweise 800 bis 1000 °C beträgt.

9. Das Verfahren nach Anspruch 6, wobei die Temperatur in Schritt (a) zwischen 400 und 800 °C, vorzugsweise zwischen 500 und 700 °C liegt.

10. Das Verfahren nach Anspruch 7, wobei die Temperatur in Schritt (a) zwischen 200 und 700 °C, stärker bevorzugt zwischen 300 und 630 °C liegt.

11. Das Verfahren nach einem der Ansprüche 1 bis 10, wobei Schritt (a) unter Druck zwischen Umgebungsdruck 1 und 3 bar, vorzugsweise zwischen 1,2 und 1,8 bar durchgeführt wird.

12. Das Verfahren nach einem der Ansprüche 1 bis 11, wobei das Verfahren außerdem umfasst
(b) Abtrennen von unreagiertem gasförmigen SO₃ von dem/den gebildeten Metallsulfat(en) und Boroxid.

13. Ein Verfahren nach einem der Ansprüche 1 bis 12, wobei das Verfahren außerdem umfasst
(c) Laugen des/der gebildeten Metallsulfat(e) und Boroxid in einer wässrigen Laugenflüssigkeit, wodurch das/die Boronoxid(e) in die wässrige Laugenflüssigkeit extrahiert wird; und
(d) Durchführen einer fest/flüssig-Trennung zur Abtrennung des Boroxids, das in festem Zustand verbleibt, von dem/den gelösten Boroxid(en).

14. Ein Verfahren nach einem der Ansprüche 1 bis 12, wobei das Verfahren außerdem umfasst
(c) Laugen des/der gebildeten Metallsulfat(e) und Boroxid in einer wässrigen Laugenflüssigkeit, wodurch das/die Metallsulfat(e) in die wässrige Laugenflüssigkeit extrahiert wird; und
(d) Durchführen einer fest/flüssig-Trennung zur Abtrennung des Boroxids, das in festem Zustand verbleibt, von dem/den gelösten Metallsulfat(en).

15. Das Verfahren nach Anspruch 13 oder 14, wobei die wässrige Laugenflüssigkeit Raffinat, verbrauchte Säure oder Wasser, vorzugsweise Wasser ist.

## Revendications

1. Procédé de production d'un oxyde de bore par sulfatation d'un minerai et/ou d'un concentré sans soufre comprenant les étapes consistant à
(o) fournir un minerai et/ou un concentré sans soufre comprenant un(des) minéral(minéraux) de borate sans soufre ;
(a) mettre en contact le minerai et/ou le concentré sans soufre avec du SO₃ gazeux pour sulfater le(s) minéral(minéraux) de borate sans soufre formant ainsi un(des) sulfate(s) métalliques et de l'oxyde de bore.

2. Procédé selon la revendication 1, dans lequel le minerai et/ou le concentré sans soufre est choisi dans le groupe constitué par les minerais sans soufre, les concentrés sans soufre, les oxydes sans soufre, les hydroxydes sans soufre, les silicates sans soufre et l'un quelconque de leurs mélanges, comprenant des minéraux de borate.

3. Procédé selon la revendication 1 ou 2, dans lequel le minerai et/ou le concentré sans soufre est choisi dans le groupe constitué par les minerais et/ou concentrés comprenant des minéraux sans soufre solides contenant un ou plusieurs minéraux de borate tels que la colémanite, l'ulexite, la kémite ou le borax.

4. Procédé selon l'une quelconque des revendications 1 à 3, dans lequel le minéral de borate sans soufre est mis en contact avec du SO₃ dans un réacteur à lit fluidisé (FB), un réacteur à lit fluidisé en circulation (CFB) ou un réacteur à lit fluidisé annulaire (AFB).

5. Procédé selon l'une quelconque des revendications 1 à 4, dans lequel le SO₃ utilisé dans l'étape (a) est produit in situ à partir de soufre.

6. Procédé selon l'une quelconque des revendications 1 à 4, dans lequel le SO₃ utilisé dans l'étape (a) est produit in situ à partir de dioxyde de soufre (SO₂).

7. Procédé selon l'une quelconque des revendications 1 à 4, dans lequel le SO₃ utilisé dans l'étape (a) est produit en combinant du soufre avec de l'oxygène pour former du dioxyde de soufre et en outre convertir catalytiquement le dioxyde de soufre en trioxyde de soufre où de préférence le trioxyde de soufre (SO₃) est produit dans des unités distinctes en tête du réacteur de sulfatation.

8. Procédé selon la revendication 5, dans lequel la température de l'étape (a) est de 700 à 1200 °C, de préférence de 800 à 1000 °C.

9. Procédé selon la revendication 6, dans lequel la température de l'étape (a) est de 400 à 800 °C, de préférence de 500 à 700 °C.

10. Procédé selon la revendication 7, dans lequel la température de l'étape (a) est de 200 à 700 °C, davantage de préférence de 300 à 630 °C.

11. Procédé selon l'une quelconque des revendications 1 à 10, dans lequel l'étape (a) est effectuée sous une pression d' pression atmosphérique 1 à 3 bars, de préférence de 1,2 à 1,8 bars.

12. Procédé selon l'une quelconque des revendications 1 à 11, dans lequel le procédé comprend en outre (b) la séparation du SO₃ gazeux n'ayant pas réagi du(des) sulfate(s) métallique(s) et de l'oxyde de bore.

13. Procédé selon l'une quelconque des revendications 1 à 12, dans lequel le procédé comprend en outre
(c) la lixiviation du(des) sulfate(s) métalliques et de l'oxyde de bore formés dans une liqueur de lessivage aqueuse extrayant ainsi l'oxyde de bore dans la liqueur de lessivage aqueuse ; et
(d) la réalisation d'une séparation solide-liquide pour séparer le(les) sulfate(s) métallique(s) restant(s) à l'état solide du dioxyde de bore dissous.

14. Procédé selon l'une quelconque des revendications 1 à 12, dans lequel le procédé comprend en outre (c) la lixiviation du(des) sulfate(s) métallique(s) et du dioxyde de bore formés dans une liqueur de lessivage aqueuse extrayant ainsi le(les) sulfate(s) métallique(s) dans la liqueur de lessivage aqueuse ; et
(d) la réalisation d'une séparation solide-liquide pour séparer l'oxyde de bore restant à l'état solide du(des) sulfate(s) métallique(s) dissous.

15. Procédé selon la revendication 13 ou 14, dans lequel la liqueur de lessivage est un raffinat, de l'acide dépensé ou de l'eau, de préférence de l'eau.
